(19) **Europäisches Patentamt / European Patent Office / Office européen des brevets**

(11) **EP 3 468 051 B1**

(12) **EUROPEAN PATENT SPECIFICATION**

(45) Date of publication and mention
of the grant of the patent:
**26.08.2020   Bulletin 2020/35**

(51) Int Cl.:
***H04B 1/69*** *(2011.01)*          ***H04L 5/00*** *(2006.01)*
***H04J 13/18*** *(2011.01)*

(21) Application number: **18198124.2**

(22) Date of filing: **02.10.2018**

(54) **SYSTEM AND METHOD FOR OPTIMISING THE USE OF THE RADIO SPECTRUM AS A FUNCTION OF THE AIR TRANSMISSION TIMES**

SYSTEM UND VERFAHREN ZUR OPTIMIERUNG DER NUTZUNG DES FUNKSPEKTRUMS ALS EINE FUNKTION DER LUFTÜBERTRAGUNGSZEITEN

SYSTÈME ET PROCÉDÉ POUR OPTIMISER L'UTILISATION DU SPECTRE RADIO EN FONCTION DES DURÉES DE TRANSMISSION D'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **05.10.2017   IT 201700111602**

(43) Date of publication of application:
**10.04.2019   Bulletin 2019/15**

(73) Proprietor: **Unidata S.p.A.**
**00148 Roma (RM) (IT)**

(72) Inventors:
• **BIANCHI, Giuseppe**
**00199 ROMA (RM) (IT)**
• **CAMPO, Manuel**
**00019 TIVOLI (RM) (IT)**
• **CAPONI, Alberto**
**03100 Frosinone (FR) (IT)**
• **CUOMO, Francesca**
**00123 ROMA (RM) (IT)**
• **PISANI, Patrizio**
**00167 ROMA (RM) (IT)**
• **ROSSINI, Giampaolo**
**00041 ALBANO LAZIALE (RM) (IT)**

(74) Representative: **Fiammenghi, Eva et al**
**Fiammenghi - Fiammenghi**
**Via delle Quattro Fontane, 31**
**00184 Roma (IT)**

(56) References cited:
**US-A1- 2014 098 782**

## Description

### Field of the invention

The invention generally regards mobile telecommunication apparatus, more in particular it refers to several solutions that allow to optimise the use of the spectrum available for radio mobile devices, regarding time-on-air.

### Description of the prior art

Radio spectrum is a resource under increasing demand due to the unstoppable growth of mobile services and applications. This makes the importance of efficiently exploiting such spectrum so as to be able to sustain the increasingly growing demand for such resource by mobile devices crucial and fundamental. In environments in which mobile devices use the same radio resource, it becomes extremely important to create a system capable of allowing the optimisation of use of the spectrum, reducing the probability of interference between the radio devices as much as possible.

Exploiting the spectrum to the maximum allows receiving a greater number of devices that require access to the means and, thus, increasing the capacity of the network, but still considering the physical limits of the network.

Besides the fact of exploiting the radio spectrum to the maximum, there arises the need for creating a network infrastructure capable of covering an extended area and that is characterised by a hierarchical and centralised structure with the aim of managing the presence of a progressively increasing number of connections in the best manner possible. At the base of such infrastructure, it is possible to position simple devices, capable of communicating in down-link and in up-link with one or more radio stations scattered in the area which will serve as network access points, and which will have the task of receiving such messages and forwarding them to a network server, which will represent the network fulcrum. In this manner, it will be possible to increase the performance of the network by increasing the number of radio stations so as to make each one of them to manage a smaller number of connections.

Besides managing the huge amount of data, it receives from the network, the server has the task of allocating the radio parameters to each of the devices as a function of the values derived by the system by using the optimisation method.

US 2014/098782 refers to wireless communication systems for providing enhanced Long-Term-Evolution (LTE) methods -the latest generation cellular radio standard- . According to this system the transmission time is considered as relevant info to provide for a desired level of system efficiency, namely to optimize the radio spectrum.

The length of the spreading code is adapted for group of UEs (User Equipments) with similar path loss. The assigned spreading code has a spreading factor which is variable and dynamically selected based on one or more system performance criteria.

The transmission time is taken into account from eNB (base station or ENodeb) to allocate the spread factors, therefore an estimation of the time needed for the transmission using different code is actually done.

The problem to be solved may therefore be regarded as how to modify or adapt the closest prior art to provide an absolutely alternative way of obtaining the technical effect that the closest prior achieves.

Thus, the object of the present invention is to provide a system consisting of a radio infrastructure and a network infrastructure comprising a method absolutely alternative capable of providing a controlled allocation of radio parameters for each radio device of the mobile network.

Lastly, an object of the present invention is to provide a system and a method for optimising the radio spectrum as a function of the time-on-air that uses constitutive components, materials and standard technology as concerns mobile services and applications for the user, with the aim of making the method and the relative apparatus inexpensive and easy to maintain.

These and other objects, which will be clear from the description, are obtained with a method for optimising the radio spectrum as a function of the air transmission times which provides for a system consisting of elements (mobile radio devices, base radio station) having communication and signalling parameters that are programmable, as well as reprogrammable, so that it is possible to process a controlled allocation of such radio parameters for each device that forms the system by means of the method for optimising radio resources subject of the present invention.

For each radio device it is possible, using the base radio stations, to characterise and set the radio parameters that allow to vary the message transmission behaviour by the specific radio device. Thus, the present invention allows to allocate and re-programme the parameters used by the radio devices, which form the mobile network, to allow and optimise the balanced distribution of the load for each of the subsets of the radio devices having the same transmission characteristics characterised by the transmission parameters.

By of non-exclusive and non-limiting example, it is possible to consider a communication using the Spread Spectrum (SS) modulation whose transmission is characterised by the parameter referred to as Spreading Factor (SF). Radio devices characterised by different spreading factor values are orthogonal to each other, thus they are capable of communicating at the same instant, at the same frequency, but without having to be subjected to an interference of the signals on the radio channel. Increasing the value of the spreading factor allocated to a radio device allows having a more robust communication with the base stations furthest from it. At the same time, this entails, for example, an increase of the time required for transmitting the messages on the radio channel (the time used for transmitting the message) and thus an increase of the time-on-air of each message sent by the same radio device. The present invention consists in a system capable of optimising the distribution of the transmissions carried out by the mobile radio devices through the uniform and balanced use of the available radio resource (radio channel). This system is capable of characterising both statically and dynamically the transmission needs of each mobile radio device (profiling devices) and use such characterisation to equalise the use of the radio channel.

The present invention provides for improving the performance of the currently most common and intuitive allocation method: the radio transmission parameters allocated to each radio device are obtained based on the power of the signal received by the single reference base station. Considering the high density of radio devices, such approach will allocate the same spreading factor to most of the radio devices thus without exploiting the possibility of allocating different values that would allow a balanced and optimised use of the spectrum. The present invention is defined by the attached independent claims. Other preferred embodiments may be found in the dependent claims. Further embodiments as described in the following not falling under the scope of the claims are provided for explanatory purpose only.

Description of the figures

With the aim of better understanding the invention and without limiting the scope of protection thereof, the invention will be illustrated according to several preferred embodiments with reference to the attached figures, wherein:

Fig. 1 is a schematic representation of the system according to the present invention in all components thereof;
Fig. 2 is a representation of the protocol for re-programming radio devices according to the present invention;
Fig. 3 is a block representation showing the interaction between the system server, the proposed optimisation method and profiling modules which allow the method to accelerate the convergence of the algorithm;
Fig. 4a, 4b are bar diagrams respectively showing how the time-on-air (in ms) and the data-rate value (in bps) vary upon the variation of the spreading factor value;
Fig. 5a, 5b, 5c are bar diagrams showing the congestion index values obtained by each iteration of the proposed method - considering a non-limiting example - for each value of the spreading factors;

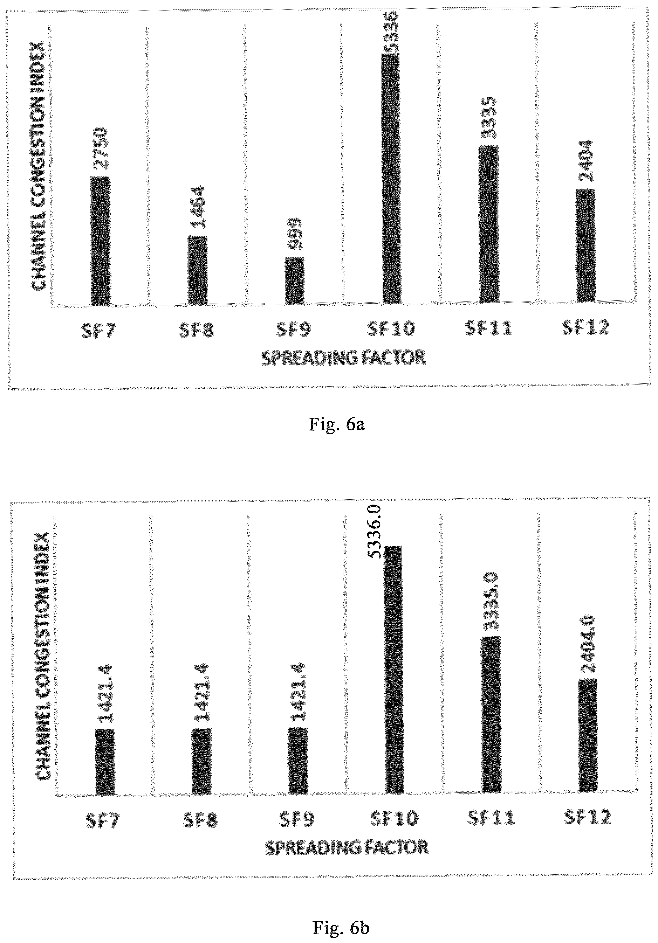

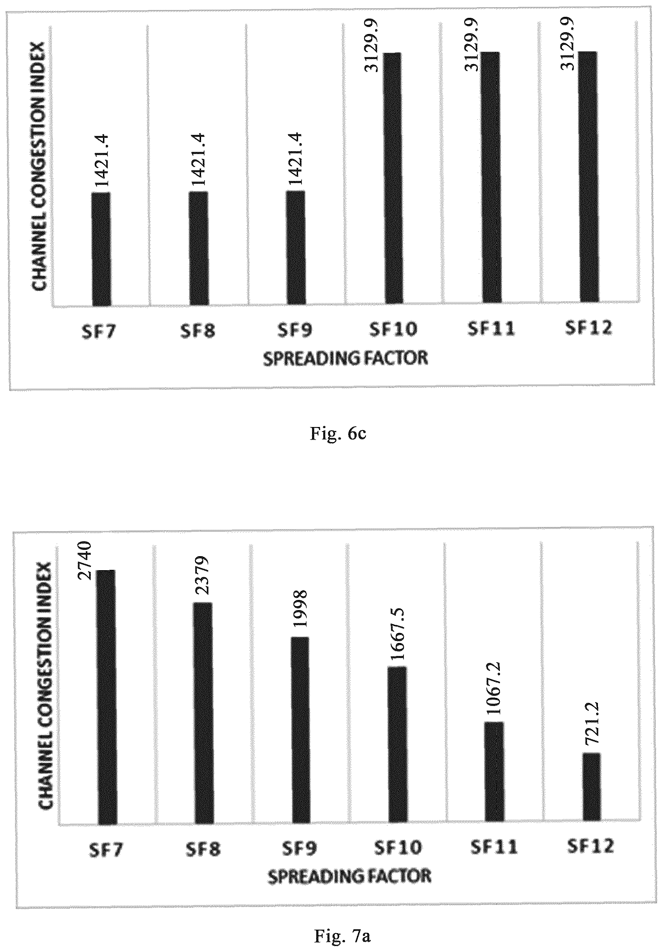

Fig 6a, 6b, 6c are bar diagrams showing the congestion index of the channel or for each value of the spreading factors in case of a general allocation;

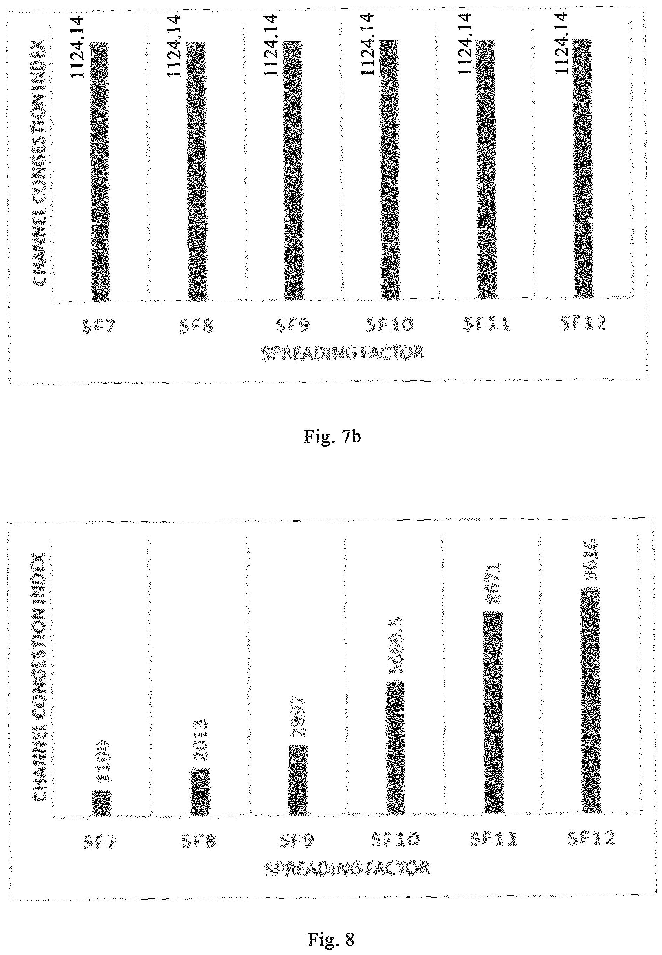

Fig 7a, 7b are bar diagrams regarding decreasing coefficients of congestion in a first limit case, according to the present invention;
Fig. 8 is a bar diagram regarding increasing coefficients of congestion for a second limit case;
Fig. 9 is a block diagram of an algorithmic procedure crucial for implementing the method according to the present invention.

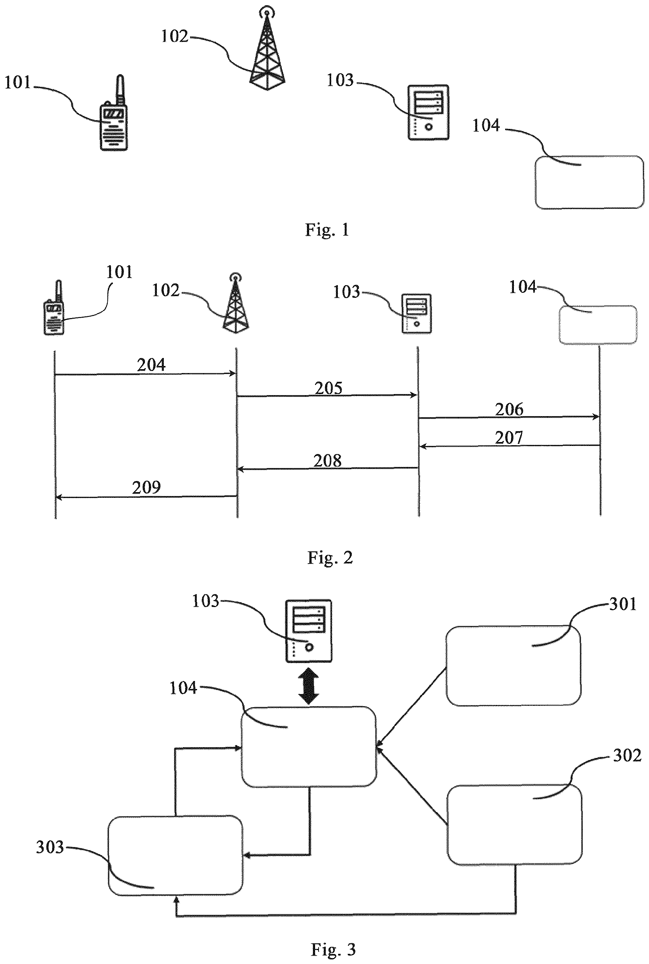

As mentioned in figure 1 shown is an entirety vision of the system according to the present invention. It shows the elements comprised in the presented system. In particular, the radio device 101, the base radio station 102 and the server 103. The system must have at least one radio device 101, at least one base radio station 102 and at least one server 103. The server 103 has the task of implementing the optimisation method 104. Each radio device 101 is capable of sending messages to at least one of the base radio stations 102. Each radio device 101 is capable of receiving messages from at least one base radio station 102. The base radio station 102 has the task of forwarding the received messages to the server 103. The server 103 processes the received messages, eliminates duplicates and re-programmes the radio parameters of the radio devices 101 through the optimisation method 104 which through a control message directed to the server 103 designates a specific base radio station 102. Figure 2 shows the protocol for re-programming the radio devices. The radio device (101) sends a message (204) to one or more base radio stations 102. Each base radio station 102 will send to the server 103 the radio measurements 205 (for example SNR, RSSI...) alongside the message 204: such measurements will be exploited by the server 103 to choose the optimal allocation of the radio resources. The server 103 sends the radio measurements 206 to the presented optimisation method 104 which responds to the server 103 with a control message 207 which will designate a specific base radio station 102 through a message 208. The base radio station 102 will forward a control message 209 to a specific radio device 101. Such messages 207, 208, 209 returning to the radio device 101 are based on parametrisations such as change of frequency, power, SF.

As indicated in figure 3, the invention is based on the interaction between the server 103, the proposed optimisation method 104 and profiling modules which allow the method to accelerate the convergence of the algorithm. The profiler 301 allows to collect information on the state of the base radio stations while the profiler 302 allows to collect information from the radio devices: both allow the method to carry out a first estimation of allocation of the symbols or of the users. The result of the method goes in input to the dynamic profiler 303 alongside the output of the profiler 302.

This allows the method to go to convergence optimising the system further. The dynamic profiler 303 allows the method to take more accurate decisions based on the behaviour trend of the radio devices 101.

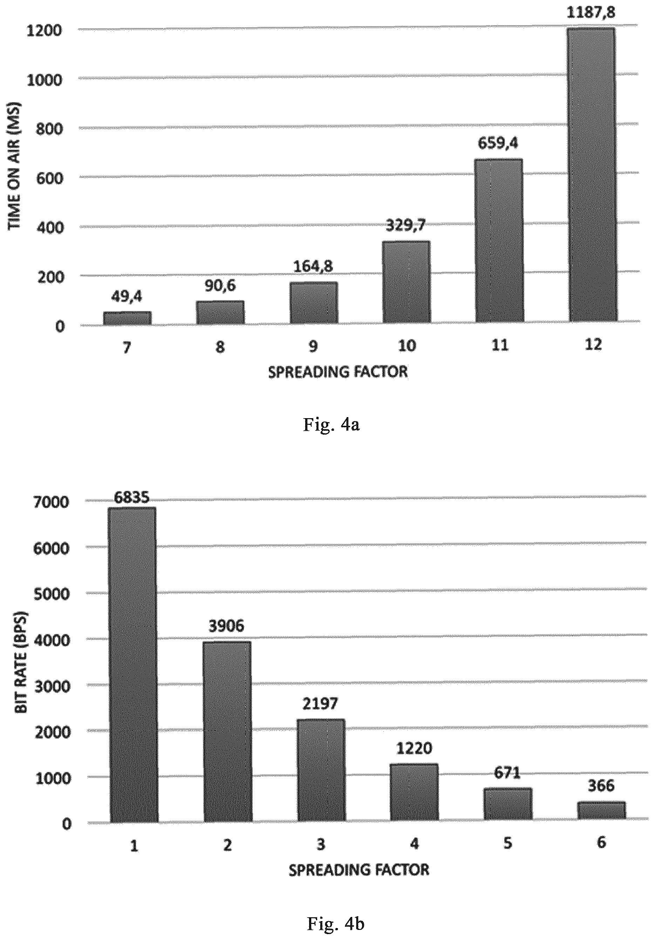

In figure 4a, 4b it was observed that the optimisation method of the radio resource according to the present invention is based on the number of physical measures of the channel and the time-on-air of the transmission devices. In particular, the bar diagram 4a shows how the time-on-air varies (in ms) upon the variation of the spreading factor value. The bar diagram 4b shows how the bit rate of the communication varies upon the variation of the spreading factor value.

The table below shows general values regarding time-on-air, data-rate, weight w and inverse of the weight q for each spreading factor value.

| SF | ToA (ms) | Data Rate (bps) | w | q |
|----|----------|-----------------|---|---|
| $SF_1$ | $T_1$ | $DR_1$ | $\alpha_1$ | $1/\alpha_1$ |
| $SF_2$ | $T_2$ | $DR_2$ | $\alpha_2$ | $1/\alpha_2$ |
| $SF_3$ | $T_3$ | $DR_3$ | $\alpha_3$ | $1/\alpha_3$ |
| $SF_4$ | $T_4$ | DR4 | $\alpha_4$ | $1/\alpha_4$ |
| ... | ... | ... | ... | ... |
| SFend | $T_{end}$ | DRend | $\alpha_{end}$ | $1/\alpha_{end}$ |

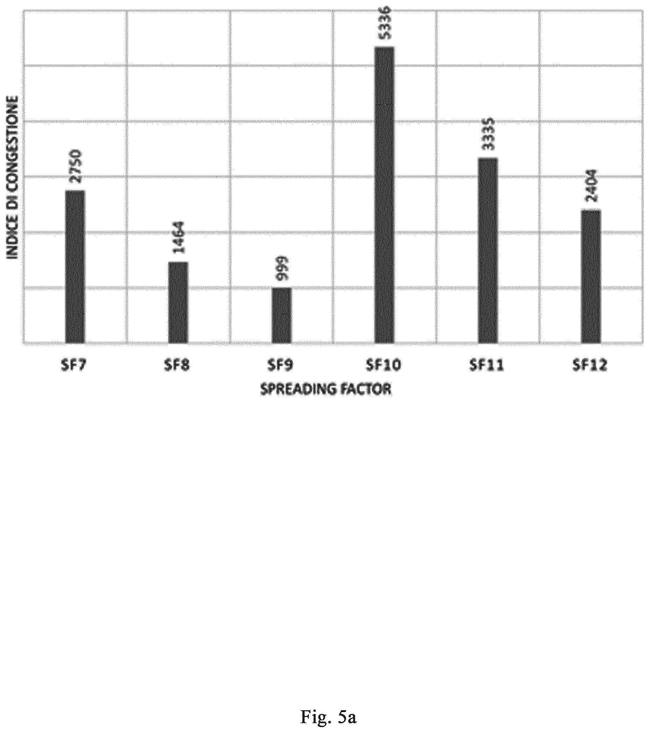

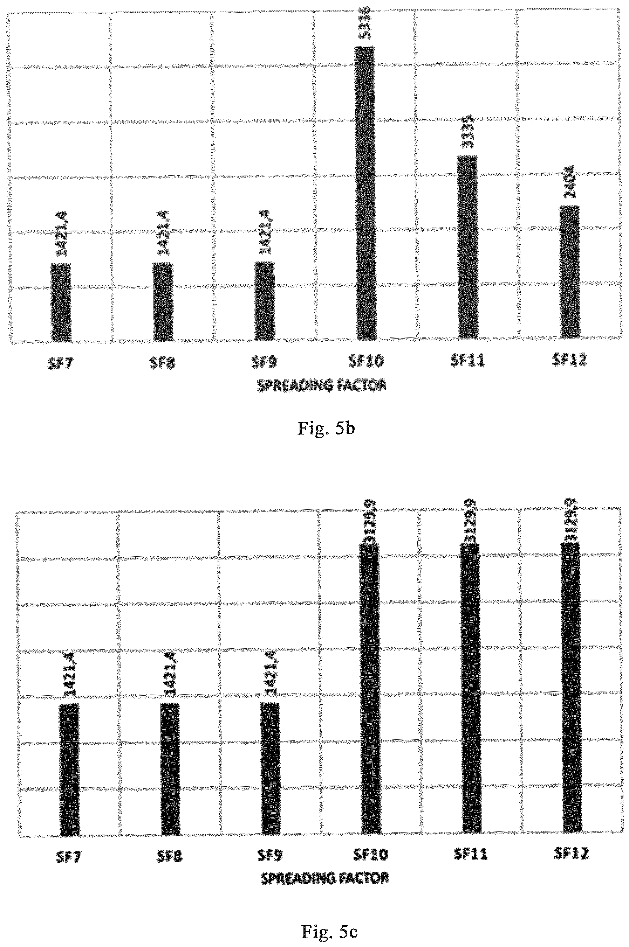

Figure 5a, 5b, 5c shows numerical non-exclusive and non-limiting examples of the method subject of the present invention. In particular, the bar diagram 5a shows the overall mean congestion index for each value of the spreading factors in case of a general allocation. The bar diagram 5b shows the result in terms of mean congestion index for each value of the spreading factor value after the first iteration of the proposed method. The bar diagram 5c shows the result in terms of congestion index after the second iteration of the proposed method.

It should be observed that hereinafter the description and figures shown exhaustively represent specifications required to implement the invention. Other embodiments can provide for structural, logical, electrical and process changes as well as other changes. Portions and functionalities of some embodiments can be included in, or replaced by, such embodiments.

The radio device 101 is capable of being programmed to utilise different frequencies, different powers and different spreading factors for radio communication. The different spreading factors are orthogonal to each other, hence several radio devices 101 having different spreading factors, are capable of communicating simultaneously without causing interference. The radio device can be programmed locally, through a dedicated interface and in remote mode following the protocol in Figure 2.

The base radio station 102 is capable of receiving and transmitting messages on the radio channel using different frequencies and signal powers, as well as different modulations. The base radio station can autonomously select the method transmission methods or it can receive commands from the network processing and optimisation server, which specify such method, according to the protocol of Figure 2. Contrary to the conventional cellular networks, each radio device 101 is not associated to a particular base radio station 102 to have access to the network: the base radio station serves as a connection layer between radio devices 101 and server 103. After receiving the message from at least one radio device 101, the base station 102, is capable of adding, to the message, information regarding the message radio reception quality. By way of non-exclusive and non-limiting example, it is possible to consider the RSSI (Received Signal Strength Indicator) as the parameter that describes the reception quality. The base radio station 102 has the task of managing the response times towards the radio devices 101 to the maximum. These times must be extremely accurate so as to be able to send a message to a specific device within its reception window. By way of non-exclusive and non-limiting example, it is possible to either send the response message to the radio device 101 upon receiving the message, or carry out a scheduling by adding in the message the date and time of sending the next message.

The server 103 is capable of receiving and transmitting messages from and towards at least one base radio station 102. The server 103 must be capable of decoding the messages coming from the radio devices 101 in turn generating response messages which will be sent to the devices through a base radio station 102: it will thus have the object of designating the best base radio station 102 with the aim of sending a response message to a specific radio device 101. Furthermore, the server 103 has the task of eliminating the duplicates of the messages coming from the different base radio stations 102. The main role of the server 103 is to suitably set the programmable parameters of all radio devices 101 of the network so as to maximise the load borne by the system.

**\*\*\* DETAILS OF THE METHOD \*\*\***

The network processing and optimising server receives the messages from all base radio stations that form the network. Such messages have the main task of conveying the data received from the mobile radio devices together with the quality values of the channel measured by the base radio stations (e.g.. RSSI, SNR, etc.). Using this information, the server is capable of identifying the number D of radio devices that can communicate with the base radio station. The server initially defines the number of radio devices k which must belong to a given set of devices regarding which a specific spreading factor must be used. By way of example, a possible initial value is k=D/6: this leads to having a uniform allocation of the spreading factors and, thus, sets consisting of an equal number of radio devices having the same spreading factor. The only limitation to the allocation of the spreading factors is represented by the distance between the radio device and the base radio station given that the allocated value determines the maximum distance reachable by the radio device. As a matter of fact, a radio device having a spreading factor whose value is equal to X will still be able to reach the same distance even should such value be increased (with a smaller data-rate but with a greater communication robustness). However, should such spreading factor be reduced, the distance covered by the radio mobile device would be smaller. Obviously, such type of distribution does not fully exploit the capacity of the radio resource in that: (i) the allocation of the spreading factor must take into account the distance between the radio device and the base radio station, (ii) interference on the radio channel is not minimised and (iii) the radio devices having a high spreading factor are penalised, in terms of data-rate, with respect to those having a low spreading factor.

The final objective of the proposed method is to balance the occupation times of the radio resource between different spreading factors, maintaining the "reachability" restriction between the mobile radio device and the base radio station valid. There is thus defined the vector of the reference time values (e.g. time-on-air, symbol times, etc.) for each of the spreading factors $AT = [\alpha_1, \alpha_2, ..., \alpha_{end}]$ and there is defined the relative vector normalised to the time value corresponding to the smaller spreading factor $w = \{w_i , \forall i = 1...end \mid w_i = \alpha_i/\alpha_1\}$. For the sake of simplicity, the obtained vector q is defined as $q = \{q_i , \forall i = 1...end \mid q_i = w_i^{-1}\}$.

Subsequently, there is defined the weighted vector P whose elements $P_i$ represent the congestion index for each value of the spreading factor $SF_i$ obtained by the product between the number of radio devices initially allocated to each spreading factor and the relative normalised time value:

$$P = \{P_i, \forall i = 1\ldots end \mid P_i = n_i * w_i\}$$

The object of the method is to balance the values included in P so as maintain the radio devices represented therein capable of communicating with the base radio stations. This entails that if the method finds the values in P to be characterised by a decreasing order, it tries to distribute the radio devices at different spreading factors trying to find a non-decreasing order, when possible. At each iteration, the method 104 controls the vector P to find the values that represent the local peaks and forms the vector p with the indices of the maximum values, of the first and the last value of P as:

$$p = \begin{cases} p(1) = 0 \\ p(i) = \{i - 1 : P(i) > P(i - 1), \forall i \in 2, ..., l\} \\ p(end) = l \end{cases}$$

At this point, the following vector of the weighted means can be calculated:

$$\hat{p}(i) = \frac{\sum_{r=p(i)+1}^{p(i+1)} P(r) \cdot q(r)}{\sum_{r=p(i)+1}^{p(i+1)} q(r)} , \forall i \in [1, len(p) - 1]$$

Such vector of the weighted means is used for balancing the values of P. As a matter of fact, given two adjacent values of such vector (e.g. $Z = p(i)$ and $S = p(i + 1)$), the elements contained between these indices of the vector P will have the same value such that $P(Z + 1,..., S) = \hat{p}_1$. At the end of the iterations, we can calculate the number of resources (e.g. the number of radio devices, number of symbol times, etc.) to be allocated to each spreading factor as:

$$k_{AT} = P * q$$

PSEUDOCODE OF THE ALGORITHM

---

**Algorithm    EXPLoRa-AT**

```
1: function EXPLoRa−AT($n_{vec}$)
2:     Let $SF_{set} \leftarrow [SF_1, SF_2 \ldots, SF_{end}]$
3:     $w \leftarrow [\alpha_1, \alpha_2 \ldots, \alpha_{end}]$
4:     $q \leftarrow w^{-1}$
5:     $P \leftarrow n_{vec} \cdot w$
6:     $old\_p = 0$
7:     $p = 1$
8:     while $old\_p \neq p$ do
9:         $old\_p \leftarrow idx$
10:        $p_{idx} \leftarrow indici\_picchi\_locali(P)$
11:        $start \leftarrow 0$
12:        for $i$ in $[p_{idx}, len(P)]$ do
13:            $P[start : i] \leftarrow somma(P[start : i] * q[start : i])$
14:            $P[start : i] \leftarrow P[start : i]/somma([start : i])$
15:            $start \leftarrow i$
16:        end for
17:    end while
18:    return $k_{AT} \leftarrow P \cdot q$
19: end function
```

---

VARIABLES OF THE ALGORITHM

| NAME | MEANING | NOTES |
|------|---------|-------|
| n_vec | Vector of the number of radio devices for each spreading factor | |
| w | Vector of the weights to be used for each spreading factor | |
| q | Inverse of the weight vectors | |
| P | Vector of the congestion indices | |
| old_p | Index/Counter | |
| p | Index/Counter | |
| idx | Index/Counter | |
| p_idx | Vector of the indices to be used for equalization | Contains all indices regarding the vector P up to the identified local maximum |
| start | Index/Counter | |
| i | Index/Counter | |
| k_AT | Vector of the final allocation resulting from the algorithm | |

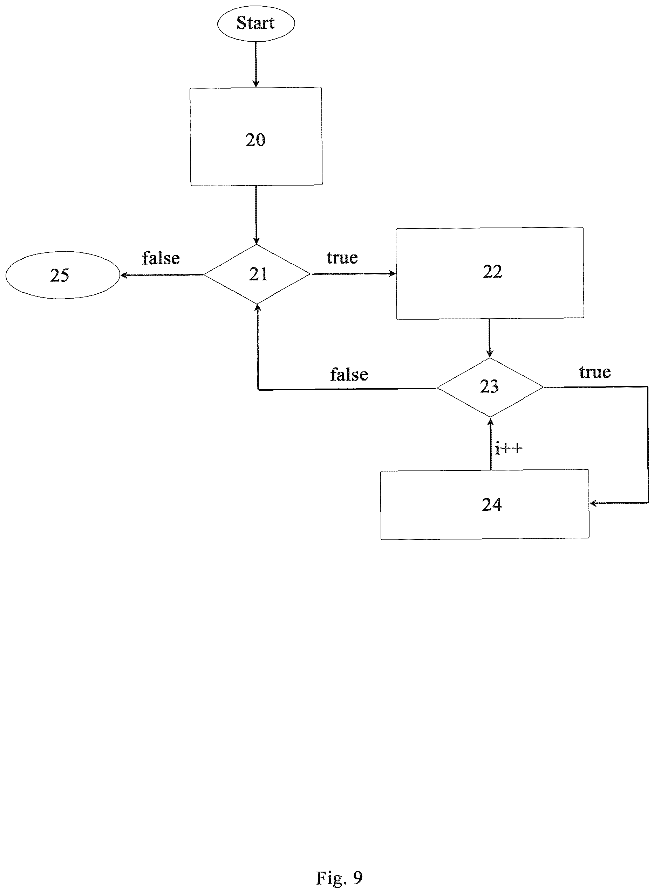

Fig. 9 shows a block diagram of an implementation of the main algorithm according to the present invention. In the initial block 20 there are provided for operations regarding the allocation of the weights $w^{-1}$ to q ($q \leftarrow w^{-1}$), the allocation to P of $n_{vec} * w$, and the initialisation of $p_{old}$ to zero and of p to 1.

In the initial cycle opening test 21, it is assessed if $p_{old}$ is different from p. Should the condition be true, p is allocated to $p_{old}$ and the value returned by the find_peak_index(P) function is allocated in $p_{idx}$. The positioning of start to zero and i to $p_{idx}$ follow.

Thus, one enters into a cycle which operates on the 23 i < len(P) condition, wherein the following allocations are carried out in 24:

$P_{start \to i} \leftarrow$ sum $(P_{start \to i} * q_{start \to i})$
$P_{start \to i} \leftarrow P_{start \to i}$ / sum $(P_{start \to i} * q_{start \to i})$
Start $\leftarrow$ i

The condition of exiting from the cycle provides for the allocation 25 of (P * q) to $K_{AT}$.

PRACTICAL EXAMPLE OF THE ALGORITHM

The vector P is defined: the -ith element will be the product between the -ith element of the vector and the -ith element of the vector w. Given P, such vector is iterated from the first position: if P[1] < P[2] nothing can be done, given that we cannot attribute to EDs having SF=8 a value of SF equal to SF=7, otherwise they would not be covered by the network, thus it is verified if P[2] < P[3] and so on. If the element P[i] is still smaller or equal to the element P[i + 1], of if the vector PI is non-decreasing, the algorithm ends. If P[1] > P[2] instead, it means that the subset SF7 is overloaded with respect to the second, so we can attribute a greater SF to the EDs which are found at SF7 distributing the load: then it is also verified if P[2] > P[3] and so on, until a value according to which P[i] < P[i + 1] is found. At this point, there follows the calculation of the weighted mean of the loads in terms of Air-Time and distribute such value (equal for all) to all subsets considered in this round. For example, assuming having considered the elements in position P[1], P[2] and P[3], the new value to be allocated in this position is:

$$P = \frac{P[1] * q[1] + P[2] * q[2] + P[3] * q[3]}{q[1] + q[2] + q[3]}$$

At this point, the process resumes from the start, until the vector P[1] is non-decreasing. Once obtained non-decreasing P[1], it is multiplied number by number by the vector q so as to obtain the number of radio devices required to be attributed for each subset of SF.

Advantages and industrial application of the invention

The applied method (104) allows obtaining a balanced distribution of the use of the radio channel by the radio devices that form the mobile network. Thus, exploiting the concept of ordered water-filling, based on the equalization of the occupation time by each radio device (time-on-air), guarantees the fairness of the distribution of the resources and optimises the radio resource. Obviously, the spreading factors of the radio device (101) are strictly correlated with the time used by the device to transmit a message on the channel and, thus, the selected values affect the time-on-air value. In order to obtain such equalised distribution of the use of the radio channel by the radio devices, the method uses all the information that allows them to characterise the operation scenario. The information used by the method includes:

- "factory" characterisation of the radio device: this is the information that characterises the behaviour of the devices based on the type of device (e.g. tracker, sensor, smartphone, etc.). Such information is entered into the system upon activating the device and, thus, when such device becomes part of the mobile radio network in question. This information is part of the profiling according to the specification of the radio devices (301) boosting the optimisation capacity of the proposed method.
- estimated characterisation of the radio device: this is the information that characterises the behaviour of the devices based on the history of the behaviours of the device (e.g. tracker, sensor, smartphone, etc.). Such information is estimated using the history of the transmissions and behaviours recorded in the system. This information is part of the dynamic profiling of the radio devices (303) boosting and refining the optimisation capacity of the proposed method.
- characterisation of the radio resources of the base radio station: this information characterises the capacity of transmission and reception of the radio messages by the base radio stations. This information includes any restrictions or limitations of use of the radio resource (e.g. encrypted channel, licensed frequency, etc.). This information is part of the profiling of the stations (302) boosting and refining the optimisation capacity of the proposed method.
- characterisation of the radio transmission: this is the information on the quality of the channel measured by the base radio stations (e.g. RSSI, SNR, etc.) for each message received by the radio devices.

**Claims**

1. Method for optimising a radio spectrum in mobile telecommunications services, as a function of air transmission times, used in a telecommunications network architecture that covers an extended area and with a hierarchical and centralised structure that manages the presence of a high number of connections between n elements, radio devices (101), connected to at least one base radio station (102)

   - operating with communication and signalling parameters that are programmable, as well as reprogrammable, in real time, to process a controlled allocation of the radio parameters for each radio device comprised in the architecture, so as to vary a message transmission behaviour by a specific radio device (101) by optimising a targeted distribution of a load for each subset of radio devices (101) having same transmission characteristics and
   - using, as balancing parameter, a time-on-air, as the message symbol time, providing for the execution of an estimation of symbol times to be assigned for each value of a spreading factor and then redistributing them, to the various radio devices, based on information received and processed by a dedicated control server (103),

   wherein a reprogramming of the radio device (101) occurs through the following steps:

   i- the radio device (101) sends a message (204) to one or more base radio stations (102), and
   ii- the base radio station (102) sends to the server (103) radio measurements (205) detected together with the message (204);
   iii- such measurements are used by the server (103) in order to process and select an optimal allocation of radio resources,
   iv- the server (103) processes and provides the radio measurements (206) to an optimisation method (104),
   v- the optimisation method responds to the server (103) by sending it a control and activation message (207) of a specific base radio station (102),
   vi- such base radio station (102) forwards a control message (209) to the radio device (101), containing the configuration parameters for the reprogramming, the optimisation method balancing occupation times of the radio resource among different spreading factors, maintaining valid a reachability restriction between the radio device (101) and the base radio station (102) by means of an ordered water-filling calculation procedure comprising the following steps:

   a) a vector of the time-on-air values is defined for each of the spreading factors AT = $[\alpha_1, \alpha_2, ..., \alpha_{end}]$, and
   b) a relative vector normalised to the time-on-air value is defined, corresponding to the spreading factor having smallest value w = $\{w_i , \forall i = 1... \text{ end} \mid w_i = \alpha_i/\alpha_1\}$, simplified through the vector q obtained as q = $\{q_i , \forall i = 1... \text{ end} \mid q_i = w_i^{-1}\}$,
   c) subsequently, a weighted vector P is defined whose elements $P_i$ represent a congestion index for each value of the spreading factor $SF_i$ obtained by a product between the number of radio devices initially allocated to each spreading factor and the relative normalised time-on-air value:

$$P = \{P_i, \forall i = 1\ldots \text{end} \mid P_i = n_i * w_i\}$$

   d) in order to balance the values included in P so as to maintain the radio devices represented therein capable of communicating with the base radio stations, if values are detected in P **characterised by** a decreasing order, the radio devices tend to be distributed at different spreading factors, trying to find a non-decreasing order, when possible, by controlling the vector P at each iteration in order to find the values that represent the local peaks and forming the vector p, with the indices of the maximum values and those of the first and last value of P, as:

$$p = \begin{cases} p(1) = 0 \\ p(i) = \{i - 1 : P(i) > P(i - 1), \forall i \in 2, \ldots, l\} \\ p(\text{end}) = l \end{cases}$$

   e) the calculation of a vector of the weighted means is carried out:

$$\hat{p}(i) = \frac{\sum_{r=p(i)+1}^{p(i+1)} P(r) \cdot q(r)}{\sum_{r=p(i)+1}^{p(i+1)} q(r)} , \forall\, i \in [1, \mathrm{len}(p) - 1]$$

such vector of the weighted means being used for balancing the values of P, based on a principle that given two adjacent values of such vector Z = p (i) and S = p (i + 1), the elements contained between these indices of the vector P have the same value such that P (Z + 1, ..., S) = $\hat{p}_1$,

f) at the end of the iterations, the number of radio devices to be allocated to each spreading factor is calculated, as:

$$k_{AT} = P * q$$

2. Method for optimising the radio spectrum as a function of the air transmission times according to claim 1 **characterised in that** the server (103) receives and transmits the messages from and to at least one base radio station (102), such server (103) being able to decode the messages coming from the radio devices (101), in turn generating response messages that are sent to the devices by means of a base radio station (102), designating the best base radio station (102) in order to send a response message to a specific radio device (101), and from here the server (103) reconfiguring the programmable parameters of all radio devices (101) of the network so as to maximise the load supported by the system, based on said ordered water-filling procedure of balancing of an occupation time of the channel by each radio device.

3. Method for optimising the radio spectrum as a function of the air transmission times, according to claim 2 **characterised in that** it is based on the interworking between the server (103) and the optimization method (104) with profiling modules that allow accelerating the convergence of the algorithm of the optimisation method, a first profiler (301) allowing to collect information on the state of the base radio stations and a second profiler (302) allowing to collect information from the radio devices, both allowing to carry out a first estimate of allocation of the symbols or of the users, a result of the application being brought as an input to a dynamic profiler (304) together with the output of the second profiler (302) , thus obtaining an optimal convergence on a decision based on the behaviour trend of the radio devices (101).

4. Method for optimising the radio spectrum as a function of the air transmission times, according to claim 3 **characterised in that** a server side profiler (103) is capable of processing the information acquired from the network distinguished by a registration number of the radio device (101) which sent the data, by a distance between the radio device (101) and the base radio station (102) allocated thereto, by radio - RSSI, SNR - measurement parameters, by a period with which the device sends a message, by a length of the sent message and by a time during which it sends a message.

5. Method for optimising the radio spectrum as a function of the air transmission times, according to claim 1 **characterised in that** the base station (102), after having received the message from at least one radio device (101), adds information to the message regarding a message radio reception quality, with an accurate selection of synchronisation times so to be able to send a message to a specific device within and not beyond its reception window.

6. Method for optimising the radio spectrum as a function of the time-on-air according to each of the preceding claims **characterised in that** it uses an information pertaining to a behaviour of the devices starting from a type of the device, such information being inserted in the system upon activation of the device and, therefore, when such device becomes part of the mobile radio network in question, so as to provide a specific profiling of the radio devices (301).

7. Method for optimising the radio spectrum as a function of the time-on-air according to claim 6 **characterised in that** it uses the information that characterises the behaviour of the devices based on a history of the behaviours of the device, such information being estimated by using a history of transmissions and that of the behaviours recorded in the system, so as to provide a dynamic profiling of the radio devices (303).

8. Method for optimising the radio spectrum as a function of the time-on-air according to each of the preceding claims **characterised in that** it uses radio resources of the base radio stations (102) with reference to a capacity of transmission and reception of the radio messages by the base radio stations, based on possible restrictions or limitations of use of the radio resource, according to a profiling of the base radio stations.

9. Method for optimising the radio spectrum as a function of the time-on-air according to each of the preceding claims **characterised in that** it uses the information on the quality of the channel measured by the base radio stations - RSSI, SNR, - for each message received by the radio devices.

10. System for optimising a radio spectrum as a function of time-on-air, in mobile telecommunications services, which is configured to implement , for allocation of operative parameters, a method for optimising the radio spectrum in mobile telecommunications services, as a function of the times-on-air , used in a telecommunications network architecture that covers an extended area and with a hierarchical and centralised structure that manages the presence of a high number of connections between n elements, radio devices (101), connected to at least one base radio station (102) -operating with communication and signalling parameters that are programmable, as well as reprogrammable, in real time, to process a controlled allocation of the radio parameters for each radio device comprised in the architecture, so as to vary a message transmission behaviour by a specific radio device (101) by optimising a targeted distribution of a load for each subset of radio devices (101) having same transmission characteristics and -using, as balancing parameter, the time-on-air, as the message symbol time, providing for the execution of an estimation of symbol times to be assigned for each value of a spreading factor and then redistributing them, to the various radio devices, based on the information received and processed by a dedicated control server (103), wherein a reprogramming of the radio device (101) occurs through the following steps:

> i- the radio device (101) sends a message (204) to one or more base radio stations (102), and
> ii- the base radio station (102) sends the server (103) radio measurements (205) detected together with the message (204);
> iii- such measurements are used by the server (103) in order to process and select an optimal allocation of the radio resources,
> iv- the server (103) processes and provides the radio measurements (206) to an optimisation method (104),
> v- the optimisation method responds to the server (103) by sending it a control and activation message (207) of a specific base radio station (102), such base radio station (102) forwards a control message (209) to the radio device (101), containing the configuration parameters for the reprogramming, the optimisation method balancing occupation times of the radio resource among different spreading factors, maintaining valid reachability restriction between the radio device (101) and the base radio station (102) by means of an ordered water-filling calculation procedure comprising the following steps:

> a) a vector of the time-on-air values is defined for each of the spreading factors AT = $[\alpha_1, \alpha_2, ...,\alpha_{end}]$, and
> b) a relative vector normalised to the time-on-air value is defined, corresponding to the spreading factor having smallest value w = $\{w_i , \forall i = 1... \text{ end } | w_i = \alpha_i/\alpha_1\}$, simplified through the vector q obtained as q = $\{q_i , \forall i = 1... \text{ end } | q_i = w_i^{-1}\}$
> c) subsequently, a weighted vector P is defined whose elements $P_i$ represent a congestion index for each value of the spreading factor $SF_i$ obtained by a product between the number of radio devices initially allocated to each spreading factor and the relative normalised time-on-air value:

$$P = \{P_i, \forall i = 1\ldots \text{end } | P_i = n_i * w_i\}$$

> d) in order to balance the values included in P so as to maintain the radio devices represented therein capable of communicating with the base radio stations, if values are detected in P **characterised by** a decreasing order, the radio devices tend to be distributed at different spreading factors, trying to find a non-decreasing order, when possible, by controlling the vector P at each iteration in order to find the values that represent the local peaks and forming the vector p, with the indices of the maximum values and those of the first and last value of P, as:

$$p = \begin{cases} p(1) = 0 \\ p(i) = \{i - 1 : P(i) > P(i - 1), \forall i \in 2, ..., l\} \\ p(\text{end}) = l \end{cases}$$

> e) the calculation of a vector of the weighted means is carried out:

$$\hat{p}(i) = \frac{\sum_{r=p(i)+1}^{p(i+1)} P(r) \cdot q(r)}{\sum_{r=p(i)+1}^{p(i+1)} q(r)} , \forall\, i \in [1, \operatorname{len}(p) - 1]$$

such vector of the weighted means being used for balancing the values of P, based on a principle that given two adjacent values of such vector Z = p (i) and S = p (i + 1), the elements contained between these indices of the vector P have the same value such that P (Z + 1, ..., S) = $\hat{p}_1$,

f) at the end of the iterations, the number of radio devices to be allocated to each spreading factor is calculated, as:

$$k_{AT} = P * q$$

the system comprises at least one radio device (101), the at least one base radio station (102) and the at least one server (103) configured to implement said optimisation method (104), each radio device (101) being capable of sending messages to at least one of the base radio stations (102) and each radio device (101) being capable of receiving messages from one and only one base radio station (102), said base radio station (102) forwarding the received messages to the control server (103), which processes them, reprogramming the radio parameters of the radio device (101) so that it operates with a specific base radio station (102) with a particular configuration of the operative parameters, each radio device (101) being independent, at the operating level, from the particular base radio station (102) in order to have access to the network, the base radio station (102) serving as a connection layer between each radio device (101) and the control server (103).

**Patentansprüche**

1. Verfahren zur Optimierung eines Funkspektrums in mobilen Telekommunikationsdiensten als eine Funktion der Luftübertragungszeiten, das in einer Telekommunikationsnetzarchitektur verwendet wird, die einen erweiterten Bereich abdeckt und eine hierarchische und zentralisierte Struktur aufweist, welche die Anwesenheit einer hohen Anzahl an Verbindungen zwischen n Elementen, Funkvorrichtungen (101), ermöglicht, die mit zumindest einer Basisfunkstation (102) verbunden sind,

    - Betreiben mit Kommunikations- und Signalgebungsparametern, die programmierbar sowie neuprogrammierbar sind, in Echtzeit, um eine kontrollierte Zuweisung der Funkparameter für jede Funkvorrichtung zu verarbeiten, die in der Architektur enthalten ist, um ein Nachrichtenübertragungsverhalten durch eine spezifische Funkvorrichtung (101) durch Optimieren einer gezielten Verteilung einer Last für jeden Teilsatz von Funkvorrichtungen (101), die gleiche Übertragungseigenschaften aufweisen, zu variieren und

    - Verwenden eines Ausgleichsparameters, einer Sendezeit, als die Nachrichtensymbolzeit, wodurch die Ausführung einer Schätzung von Symbolzeiten bereitgestellt wird, die jedem Wert eines Ausbreitungsfaktors zuzuweisen sind, und diese dann auf Grundlage von Informationen, die durch einen dedizierten Steuerserver (103) empfangen und verarbeitet werden, neu an die verschiedenen Funkvorrichtungen verteilt werden,

    wobei eine Neuprogrammierung der Funkvorrichtung (101) durch die folgenden Schritte erfolgt:

    i- die Funkvorrichtung (101) sendet eine Nachricht (204) an eine oder mehrere Basisfunkstationen (102) und
    ii- die Basisfunkstation (102) sendet Funkmesswerte (205), die zusammen mit der Nachricht (204) erfasst werden, an den Server (103) ;
    iii- solche Messwerte werden durch den Server (103) verwendet, um eine optimale Zuweisung der Funkressourcen zu verarbeiten und auszuwählen,
    iv- der Server (103) verarbeitet die Funkmesswerte (206) und stellt diese an einem Optimierungsverfahren (104) bereit,
    v - das Optimierungsverfahren reagiert durch Senden einer Steuer- und Aktivierungsnachricht (207) einer spezifischen Basisfunkstation (102) an den Server (103) auf diesen,
    vi- eine solche Basisfunkstation (102) leitet eine Steuernachricht (209) an die Funkvorrichtung (101) weiter, welche die Konfigurationsparameter für die Neuprogrammierung enthält, wobei das Optimierungsverfahren Belegungszeiten der Funkressource unter verschiedenen Ausbreitungsfaktoren ausgleicht und dabei eine Gültigkeit der Erreichbarkeitsbegrenzung zwischen der Funkvorrichtung (101) und der Basisfunkstation (102) mithilfe eines geordneten Berechnungsvorgangs für die Wasserfüllung beibehält, der die folgenden Schritte umfasst:

a) ein Vektor für die Sendezeitwerte ist für jeden der Ausbreitungsfaktoren **AT = [$\alpha_1, \alpha_2,...,\alpha_{end}$]** definiert und

b) ein relativer Vektor, normiert auf den Sendezeitwert, ist definiert, der dem entspricht, dass der Ausbreitungsfaktor den geringsten Wert **w = {$w_i$ , $\forall i = 1...end$ | $w_i = \alpha_i/\alpha_1$}**, aufweist, vereinfacht durch den Vektor q, der als **q= {$q_i$ , $\forall i = 1...end$ | $q_i = w_i^{-1}$}**, erhalten wird,

c) nachfolgend wird ein gewichteter Vektor P definiert, dessen Elemente Pi einen Überlastungsindex für jeden Wert des Ausbreitungsfaktors $SF_i$ darstellen, erhalten durch ein Produkt aus der Anzahl an Funkvorrichtungen, die anfangs jedem Ausbreitungsfaktor zugewiesen wurden, und dem relativen normierten Sendezeitwert:

$$P = \{P_i, \forall i = 1...end \mid P_i = n_i * w_i\}$$

d) um die Werte, die in P eingeschlossen sind, auszugleichen, sodass die darin dargestellten Funkvorrichtungen weiterhin in der Lage sind, mit den Basisfunkstationen zu kommunizieren, wenn Werte in P erfasst werden, die durch eine absteigende Reihenfolge gekennzeichnet sind, werden die Funkvorrichtungen tendenziell mit verschiedenen Ausbreitungsfaktoren verteilt, wobei versucht wird, wenn möglich eine nichtabsteigende Reihenfolge aufzufinden, indem der Vektor P bei jeder Iteration gesteuert wird, um die Werte aufzufinden, welche die lokalen Spitzenwerte darstellen und den Vektor p bilden, wobei die Indizes der Maximalwerte und diejenigen des ersten und letzten Wertes von P wie folgt sind:

$$p = \begin{cases} p(1) = 0 \\ p(i) = \{i - 1: P(i) > P(i - 1), \forall i \in 2, ..., l\} \\ p(end) = l \end{cases}$$

e) die Berechnung eines Vektors der gewichteten Mittelwerte wird ausgeführt:

$$\hat{p}(i) = \frac{\sum_{r=p(i)+1}^{p(i+1)} P(r) \cdot q(r)}{\sum_{r=p(i)+1}^{p(i+1)} q(r)} , \forall i \in [1, len(p) - 1]$$

ein solcher Vektor der gewichteten Mittelwerte wird zum Ausgleichen der Werte von P auf Grundlage des Prinzips verwendet, dass, wenn zwei benachbarte Werte eines solchen Vektors als Z = p(i) and S = p(i + 1) gegeben sind, die zwischen diesen Indizes des Vektors P enthaltenen Werte denselben Wert aufweisen, sodass **P (Z + 1, ...,S)=$\hat{p}_1$**,

f) am Ende der Iterationen wird die Anzahl an Funkvorrichtungen, die jedem Ausbreitungsfaktor zuzuweisen ist, wie folgt berechnet:

$$k_{AT} = P * q$$

**2.** Verfahren zur Optimierung des Funkspektrums als eine Funktion der Luftübertragungszeiten nach Anspruch 1, **gekennzeichnet dadurch, dass** der Server (103) die Nachrichten von der zumindest einen Basisfunkstation (102) empfängt und an diese überträgt, sodass der Server (103) in der Lage ist, die von den Funkvorrichtungen (101) stammenden Nachrichten zu decodieren, seinerseits Reaktionsnachrichten zu generieren, die mithilfe einer Basisfunkstation (102) an die Vorrichtungen gesendet werden, und die beste Basisfunkstation (102) festzulegen, um eine Reaktionsnachricht an eine spezifische Funkvorrichtung (101) zu senden, wobei der Server (103) von diesem Zustand aus auf Grundlage des geordneten Vorgangs für die Wasserfüllung zum Ausgleichen einer Belegungszeit des Kanals durch jede Funkvorrichtung die programmierbaren Parameter aller Funkvorrichtung (101) des Netzwerks neukonfiguriert, um die Last zu maximieren, die durch das System unterstützt wird.

**3.** Verfahren zur Optimierung des Funkspektrums als eine Funktion der Luftübertragungszeiten nach Anspruch 2, **gekennzeichnet dadurch, dass** es auf dem Zusammenwirken des Servers (103) und dem Optimierungsverfahren (104) mit Profilerstellungsmodulen basiert, die eine Beschleunigung der Konvergenz des Algorithmus des Optimierungsverfahrens ermöglichen, wobei ein erster Profiler (301) ein Sammeln von Informationen über den Zustand der Basisfunkstationen ermöglicht und ein zweiter Profiler (302) eine Sammlung von Informationen von den Funkvorrichtungen ermöglicht, wobei beide ein Ausführen einer ersten Schätzung der Zuweisung der Symbole oder der Benutzer ermöglichen, wobei als Folge davon, dass die Anwendung als eine Eingabe in einen dynamischen Profiler (304) mit der Ausgabe des zweiten Profilers (302) zusammengebracht wird, somit eine optimale Konvergenz einer Entscheidung auf Grundlage des Verhaltenstrends der Funkvorrichtungen (101) erhalten wird.

4. Verfahren zur Optimierung des Funkspektrums als eine Funktion der Luftübertragungszeiten nach Anspruch 3, **gekennzeichnet dadurch, dass** ein Serverseitenprofiler (103) in der Lage ist, die Informationen zu verarbeiten, die von dem Netzwerk erhalten wurden und sich durch Folgendes unterscheiden: eine Registrierungsnummer der Funkvorrichtung (101), welche die Daten gesendet hat, eine Entfernung zwischen der Funkvorrichtung (101) und der dieser zugewiesenen Basisfunkstation (102), Funkmesswertparameter (RSSI, SNR), einen Zeitraum, mit dem die Vorrichtung eine Nachricht sendet, eine Länge der gesendeten Nachricht und eine Zeit, während der diese eine Nachricht sendet.

5. Verfahren zur Optimierung des Funkspektrums als eine Funktion der Luftübertragungszeiten nach Anspruch 1, **gekennzeichnet dadurch, dass** die Basisstation (102), nachdem sie die Nachricht von der zumindest einen Funkvorrichtung (101) empfangen hat, Informationen bezüglich einer Nachrichtenfunkempfangsqualität mit einer akkuraten Auswahl an Synchronisationszeiten der Nachricht hinzufügt, um in der Lage zu sein, eine Nachricht an eine spezifische Vorrichtung und innerhalb ihres Empfangsfensters und nicht darüber hinaus zu senden.

6. Verfahren zur Optimierung des Funkspektrums als eine Funktion der Sendezeit nach jedem der vorangehenden Ansprüche, **gekennzeichnet dadurch, dass** es Informationen verwendet, die sich auf ein Verhalten der Vorrichtungen beziehen, angefangen mit einem Typ der Vorrichtung, wobei solche Informationen bei Aktivierung der Vorrichtung und somit, wenn eine solche Vorrichtung Teil des entsprechenden mobilen Funknetzwerkes wird, eingefügt werden, um eine spezifische Profilerstellung der Funkvorrichtungen (301) bereitzustellen.

7. Verfahren zur Optimierung des Funkspektrums als eine Funktion der Sendezeit nach Anspruch 6, **gekennzeichnet dadurch, dass** es die Informationen verwendet, welche die Eigenschaft der Vorrichtung auf Grundlage eines Verlaufs der Verhalten der Vorrichtung kennzeichnet, wobei solche Informationen durch Verwenden eines Übertragungsverlaufs und eines Verlaufs der Verhalten, der in dem System aufgezeichnet ist, geschätzt werden, um eine dynamische Profilerstellung der Funkvorrichtungen (303) bereitzustellen.

8. Verfahren zur Optimierung des Funkspektrums als eine Funktion der Sendezeit nach jedem der vorangehenden Ansprüche, **gekennzeichnet dadurch, dass** es Funkressourcen der Basisfunkstationen (102) in Bezug auf eine Übertragungs- und Empfangskapazität der Funknachrichten durch die Basisfunkstationen auf Grundlage von möglichen Einschränkungen oder Begrenzungen der Verwendung der Funkressource gemäß einer Profilerstellung der Basisfunkstationen verwendet.

9. Verfahren zur Optimierung des Funkspektrums als eine Funktion der Sendezeit nach jedem der vorangehenden Ansprüche, **gekennzeichnet dadurch, dass** es die Informationen bezüglich der Kanalqualität (RSSI, SNR) verwendet, die durch die Basisstationen für jede Nachricht gemessen werden, die durch die Funkvorrichtungen empfangen wird.

10. System zur Optimierung eines Funkspektrums als eine Funktion der Sendezeit in mobilen Telekommunikationsdiensten, das konfiguriert ist, um zur Zuweisung von Betriebsparametern ein Verfahren zur Optimierung des Funkspektrums in mobilen Telekommunikationsdiensten als eine Funktion der Sendezeiten umzusetzen, das in einer Telekommunikationsnetzwerkarchitektur verwendet wird, die einen erweiterten Bereich abdeckt und eine hierarchische und zentralisierte Struktur aufweist, welche die Anwesenheit einer hohen Anzahl an Verbindungen zwischen n Elementen, Funkvorrichtungen (101), ermöglicht, die mit zumindest einer Basisfunkstation (102) verbunden sind

Betreiben mit Kommunikations- und Signalgebungsparametern, die programmierbar sowie neuprogrammierbar sind, in Echtzeit, um eine kontrollierte Zuweisung der Funkparameter für jede Funkvorrichtung zu verarbeiten, die in der Architektur enthalten ist, um ein Nachrichtenübertragungsverhalten durch eine spezifische Funkvorrichtung (101) durch Optimieren einer gezielten Verteilung einer Last für jeden Teilsatz von Funkvorrichtungen (101), die gleiche Übertragungseigenschaften aufweisen, zu variieren und

Verwenden eines Ausgleichsparameters, einer Sendezeit, als die Nachrichtensymbolzeit, wodurch die Ausführung einer Schätzung von Symbolzeiten bereitgestellt wird, die jedem Wert eines Ausbreitungsfaktors zuzuweisen sind, und diese dann auf Grundlage von Informationen, die durch einen dedizierten Steuerserver (103) empfangen und verarbeitet werden, neu an die verschiedenen Funkvorrichtungen verteilt werden,

wobei eine Neuprogrammierung der Funkvorrichtung (101) durch die folgenden Schritte erfolgt:

i- die Funkvorrichtung (101) sendet eine Nachricht (204) an eine oder mehrere Basisfunkstationen (102) und
ii- die Basisfunkstation (102) sendet Funkmesswerte (205), die zusammen mit der Nachricht (204) erfasst werden, an den Server (103) ;
iii- solche Messwerte werden durch den Server (103) verwendet, um eine optimale Zuweisung der Funkressourcen zu verarbeiten und auszuwählen,
iv- der Server (103) verarbeitet die Funkmesswerte (206) und stellt diese an einem Optimierungsverfahren (104) bereit,
v- das Optimierungsverfahren reagiert auf den Server (103), indem es diesem eine Steuer- und Aktivierungsnachricht (207) einer spezifischen Basisfunkstation (102) sendet, wobei eine solche Basisfunkstation (102) eine Steuernachricht (209) an die Funkvorrichtung (101) weiterleitet, welche die Konfigurationsparameter für die Neuprogrammierung enthält, wobei das Optimierungsverfahren Belegungszeiten der Funkressource unter verschiedenen Ausbreitungsfaktoren ausgleicht und dabei eine Gültigkeit der Erreichbarkeitsbegrenzung zwischen der Funkvorrichtung (101) und der Basisfunkstation (102) mithilfe eines geordneten Berechnungsvorgangs für die Wasserfüllung beibehält, der die folgenden Schritte umfasst:

a) ein Vektor für die Sendezeitwerte ist für jeden der Ausbreitungsfaktoren $AT = [\alpha_1, \alpha_2, ..., \alpha_{end}]$ definiert und
b) ein relativer Vektor, normiert auf den Sendezeitwert, ist definiert, der dem entspricht, dass der Ausbreitungsfaktor den geringsten wert $w = \{w_i, \forall i = 1...end \mid w_i = \alpha_i/\alpha_1\}$, aufweist, vereinfacht durch den Vektor q, der als $q = \{q_i, \forall i = 1...end \mid q_i = w_i^{-1}\}$, erhalten wird,
c) nachfolgend wird ein gewichteter Vektor P definiert, dessen Elemente $P_i$ einen Überlastungsindex für jeden Wert des Ausbreitungsfaktors $SF_i$ darstellen, erhalten durch ein Produkt aus der Anzahl an Funkvorrichtungen, die anfangs jedem Ausbreitungsfaktor zugewiesen wurden, und dem relativen normierten Sendezeitwert:

$$P = \{P_i, \forall i = 1... end \mid P_i = n_i * w_i\}$$

d) um die Werte, die in P eingeschlossen sind, auszugleichen, sodass die darin dargestellten Funkvorrichtungen weiterhin in der Lage sind, mit den Basisfunkstationen zu kommunizieren, wenn Werte in P erfasst werden, die durch eine absteigende Reihenfolge gekennzeichnet sind, werden die Funkvorrichtungen tendenziell mit verschiedenen Ausbreitungsfaktoren verteilt, wobei versucht wird, wenn möglich eine nichtabsteigende Reihenfolge aufzufinden, indem der Vektor P bei jeder Iteration gesteuert wird, um die Werte aufzufinden, welche die lokalen Spitzenwerte darstellen und den Vektor p bilden, wobei die Indizes der Maximalwerte und diejenigen des ersten und letzten Wertes von P wie folgt sind:

$$p = \begin{cases} p(1) = 0 \\ p(i) = \{i - 1: P(i) > P(i - 1), \forall i \in 2, ..., l\} \\ p(end) = l \end{cases}$$

e) die Berechnung eines Vektors der gewichteten Mittelwerte wird ausgeführt:

$$\hat{p}(i) = \frac{\sum_{r=p(i)+1}^{p(i+1)} P(r) \cdot q(r)}{\sum_{r=p(i)+1}^{p(i+1)} q(r)}, \forall i \in [1, len(p) - 1]$$

ein solcher Vektor der gewichteten Mittelwerte wird zum Ausgleichen der Werte von P auf Grundlage des Prinzips verwendet, dass, wenn zwei benachbarte Werte eines solchen Vektors als Z = p(i) and S = p(i + 1) gegeben sind, die zwischen diesen Indizes des Vektors P enthaltenen Werte denselben Wert aufweisen, sodass: P (Z + 1,...,S) = $\hat{p}_1$,

f) am Ende der Iterationen wird die Anzahl an Funkvorrichtungen, die jedem Ausbreitungsfaktor zuzuweisen ist, wie folgt berechnet:

$$k_{AT} = P * q$$

das System umfasst zumindest eine Funkvorrichtung (101), die zumindest eine Basisfunkstation (102) und den zumindest einen Server (103), die konfiguriert sind, um das Optimierungsverfahren (104) umzusetzen, wobei jede Funkvorrichtung (101) in der Lage ist, Nachrichten an zumindest eine der Basisfunkstationen (102) zu senden, und jede Funkvorrichtung (101) in der Lage ist, Nachrichten von einer und lediglich einer Basisfunkstation (102) zu empfangen, wobei die Basisfunkstation (102) die empfangenen Nachrichten an den Steuerserver (103) weiterleitet, der diese verarbeitet und dabei die Funkparameter der Funkvorrichtung (101) neuprogrammiert, sodass diese mit einer spezifischen Basisfunkstation (102) mit einer bestimmten Konfiguration der Betriebsparameter betrieben wird, wobei jede Funkvorrichtung (101) auf Betriebsebene von der bestimmten Basisfunkstation (102) unabhängig ist, um einen Zugriff auf das Netzwerk zu haben, wobei die Basisfunkstation (102) als eine Verbindungsschicht zwischen jeder Funkvorrichtung (101) und dem Steuerserver (103) dient.

## Revendications

1. Procédé pour optimiser un spectre radio dans des services de télécommunications mobiles, en fonction de temps de transmission dans l'air, utilisé dans une architecture de réseau de télécommunications qui couvre une zone étendue et avec une structure hiérarchique et centralisée qui gère la présence d'un nombre élevé de connexions entre n éléments, des dispositifs radio (101), connectés à au moins une station radio de base (102)

   - fonctionnant avec des paramètres de communication et de signalisation qui sont programmables, ainsi que reprogrammables, en temps réel, pour traiter une allocation contrôlée des paramètres radio pour chaque dispositif radio compris dans l'architecture, de manière à faire varier un comportement de transmission de messages par un dispositif radio (101) spécifique en optimisant une répartition ciblée d'une charge pour chaque sous-ensemble de dispositifs radio (101) ayant les mêmes caractéristiques de transmission et
   - utilisant, en tant que paramètre d'équilibrage, un temps d'émission, comme le temps de symbole de message, permettant l'exécution d'une estimation de temps de symboles à attribuer pour chaque valeur d'un facteur d'étalement et les redistribuant, aux divers dispositifs radio, sur la base d'informations reçues et traitées par un serveur de contrôle dédié (103),

   dans lequel une reprogrammation du dispositif radio (101) a lieu par l'intermédiaire des étapes suivantes :

   i- le dispositif radio (101) envoie un message (204) à une ou plusieurs stations radio de base (102), et
   ii- la station radio de base (102) envoie au serveur (103) des mesures radio (205) détectées en association avec le message (204) ;
   iii- de telles mesures sont utilisées par le serveur (103) afin de traiter et sélectionner une allocation optimale de ressources radio,
   iv- le serveur (103) traite et fournit les mesures radio (206) à un procédé d'optimisation (104),
   v- le procédé d'optimisation répond au serveur (103) en lui envoyant un message de contrôle et d'activation (207) d'une station radio de base (102) spécifique,
   vi- une telle station radio de base (102) transfère un message de contrôle (209) au dispositif radio (101) contenant les paramètres de configuration pour la reprogrammation,

   le procédé d'optimisation équilibrant des temps d'occupation de la ressource radio parmi différents facteurs d'étalement, maintenant valide une restriction d'accessibilité entre le dispositif radio (101) et la station radio de base (102) au moyen d'une procédure de calcul de remplissage d'eau ordonné comprenant les étapes suivantes :

   a) un vecteur des valeurs de temps d'émission est défini pour chacun des facteurs d'étalement **AT = [$\alpha_1$, $\alpha_2$, ..., $\alpha_{end}$]**, et
   b) un vecteur relatif normalisé à la valeur de temps d'émission est défini, correspondant au facteur d'étalement ayant la plus petite valeur w = {$w_i$, $\forall i$ = 1...end|$w_i$ = $\alpha_i/\alpha_1$}, simplifiée par le vecteur q obtenu d'après q = {$q_i$ , $\forall i$

= 1...end | $q_i = w_i^{-1}$},

c) ensuite, un vecteur pondéré P est défini, dont les éléments $P_i$ représentent un indice de congestion pour chaque valeur du facteur d'étalement $SF_i$ obtenu par un produit entre le nombre de dispositifs radio initialement alloués à chaque facteur d'étalement et la valeur de temps d'émission normalisée relative :

$$P = \{P_i, \forall i = 1\ldots\text{end} \mid P_i = n_i * w_i\}$$

d) afin d'équilibrer les valeurs incluses dans P de manière à maintenir les dispositifs radio représentés dans celui-ci capables de communiquer avec les stations radio de base, si des valeurs sont détectées dans P **caractérisées par** un ordre décroissant, les dispositifs radio tendent à être répartis à différents facteurs d'étalement, en tentant de trouver un ordre non décroissant, lorsque possible, en contrôlant le vecteur P à chaque itération afin de trouver les valeurs qui représentent les pics locaux et en formant le vecteur p, avec les indices des valeurs maximales et ceux des première et dernière valeurs de P, d'après :

$$p = \begin{cases} p(1) = 0 \\ p(i) = \{i-1 : P(i) > P(i-1), \forall i \in 2, \ldots, l\} \\ p(\text{end}) = l \end{cases}$$

e) le calcul d'un vecteur des moyennes pondérées est exécuté :

$$\hat{p}(i) = \frac{\sum_{r=p(i)+1}^{p(i+1)} P(r) \cdot q(r)}{\sum_{r=p(i)+1}^{p(i+1)} q(r)}, \forall i \in [1, \text{len}(p) - 1]$$

un tel vecteur des moyennes pondérées étant utilisé pour équilibrer les valeurs de P, sur la base d'un principe selon lequel, étant données deux valeurs adjacentes d'un tel vecteur $Z = p(i)$ et $S = p(i+1)$, les éléments contenus entre ces indices du vecteur P ont la même valeur telle que **P (Z + 1, ...,S) = $\hat{p}_1$,**

f) à la fin des itérations, le nombre de dispositifs radio à allouer à chaque facteur d'étalement est calculé, d'après :

$$k_{AT} = P * q$$

2. Procédé pour optimiser le spectre radio en fonction des temps de transmission dans l'air selon la revendication 1, **caractérisé en ce que** le serveur (103) reçoit et transmet les messages depuis et vers au moins une station radio de base (102), un tel serveur (103) pouvant décoder les messages provenant des dispositifs radio (101), en générant à son tour des messages de réponse qui sont envoyés aux dispositifs au moyen d'une station radio de base (102), en désignant la meilleure station radio de base (102) afin d'envoyer un message de réponse à un dispositif radio (101) spécifique, et de là, le serveur (103) reconfigurant les paramètres programmables de tous les dispositifs radio (101) du réseau de manière à maximiser la charge supportée par le système, sur la base de ladite procédure de remplissage d'eau ordonné consistant à équilibrer un temps d'occupation du canal par chaque dispositif radio.

3. Procédé pour optimiser le spectre radio en fonction des temps de transmission dans l'air selon la revendication 2, **caractérisé en ce qu'**il est basé sur l'interfonctionnement entre le serveur (103) et le procédé d'optimisation (104) avec des modules de profilage qui permettent d'accélérer la convergence de l'algorithme du procédé d'optimisation, un premier profileur (301) permettant de collecter des informations sur l'état des stations radio de base et un second profileur (302) permettant de collecter des informations des dispositifs radio, permettant tous deux d'exécuter une première estimation d'allocation des symboles ou des utilisateurs, un résultat de l'application étant transmis en tant qu'entrée à un profileur dynamique (304) en association avec la sortie du second profileur (302), en obtenant ainsi une convergence optimale sur une décision basée sur la tendance comportementale des dispositifs radio (101).

4. Procédé pour optimiser le spectre radio en fonction de temps de transmission dans l'air selon la revendication 3, **caractérisé en ce qu'**un profileur côté serveur (103) est capable de traiter les informations acquises auprès du réseau distinguées par un numéro d'enregistrement du dispositif radio (101) qui a envoyé les données, par une distance entre le dispositif radio (101) et la station radio de base (102) allouée à celui-ci, par des paramètres de mesure radio - RSSI, SNR -, par une période avec laquelle le dispositif envoie un message, par une longueur du message envoyé et par une durée pendant laquelle il envoie un message.

5. Procédé pour optimiser le spectre radio en fonction des temps de transmission dans l'air selon la revendication 1, **caractérisé en ce que** la station de base (102), après avoir reçu le message d'au moins un dispositif radio (101), ajoute des informations au message concernant une qualité de réception radio de message, avec une sélection précise de temps de synchronisation de manière à pouvoir envoyer un message à un dispositif spécifique dans sa fenêtre de réception et pas au-delà.

6. Procédé pour optimiser le spectre radio en fonction du temps d'émission selon chacune des revendications précédentes, **caractérisé en ce qu'**il utilise une information se rapportant à un comportement des dispositifs commençant à partir d'un type du dispositif, une telle information étant insérée dans le système lors de l'activation du dispositif et, par conséquent, lorsqu'un tel dispositif devient une partie du réseau radio mobile en question, de manière à fournir un profilage spécifique des dispositifs radio (301).

7. Procédé pour optimiser le spectre radio en fonction du temps d'émission selon la revendication 6, **caractérisé en ce qu'**il utilise l'information qui caractérise le comportement des dispositifs basé sur un historique des comportements du dispositif, une telle information étant estimée en utilisant un historique de transmissions et celui des comportements enregistrés dans le système, de manière à fournir un profilage dynamique des dispositifs radio (303).

8. Procédé pour optimiser le spectre radio en fonction du temps d'émission selon chacune des revendications précédentes, **caractérisé en ce qu'**il utilise des ressources radio des stations radio de base (102) en référence à une capacité de transmission et de réception des messages radio par les stations radio de base, sur la base de restrictions ou de limitations possibles de l'utilisation de la ressource radio, d'après un profilage des stations radio de base.

9. Procédé pour optimiser le spectre radio en fonction du temps d'émission selon chacune des revendications précédentes, **caractérisé en ce qu'**il utilise les informations sur la qualité du canal mesurée par les stations radio de base - RSSI, SNR -, pour chaque message reçu par les dispositifs radio.

10. Système pour optimiser un spectre radio en fonction du temps d'émission, dans des services de télécommunications mobiles, qui est configuré pour mettre en œuvre, en vue de l'allocation de paramètres opérationnels, un procédé pour optimiser le spectre radio dans des services de télécommunications mobiles, en fonction des temps d'émission, utilisé dans une architecture de réseau de télécommunications qui couvre une zone étendue et avec une structure hiérarchique et centralisée qui gère la présence d'un nombre élevé de connexions entre n éléments, des dispositifs radio (101), connectés à au moins une station radio de base (102) fonctionnant avec des paramètres de communication et de signalisation qui sont programmables, ainsi que reprogrammables, en temps réel, pour traiter une allocation contrôlée des paramètres radio pour chaque dispositif radio compris dans l'architecture, de manière à faire varier un comportement de transmission de messages par un dispositif radio (101) spécifique en optimisant une répartition ciblée d'une charge pour chaque sous-ensemble de dispositifs radio (101) ayant les mêmes caractéristiques de transmission et en utilisant, en tant que paramètre d'équilibrage, le temps d'émission, en tant que temps de symbole de message, permettant l'exécution d'une estimation de temps de symbole à attribuer pour chaque valeur d'un facteur d'étalement et les redistribuant ensuite aux divers dispositifs radio, sur la base des informations reçues et traitées par un serveur de contrôle dédié (103),
dans lequel une reprogrammation du dispositif radio (101) a lieu via les étapes suivantes :

    i- le dispositif radio (101) envoie un message (204) à une ou plusieurs stations radio de base (102), et
    ii- la station radio de base (102) envoie au serveur (103) des mesures radio (205) détectées en association avec le message (204) ;
    iii- de telles mesures sont utilisées par le serveur (103) afin de traiter et de sélectionner une allocation optimale des ressources radio,
    iv- le serveur (103) traite et fournit les mesures radio (206) à un procédé d'optimisation (104),
    v- le procédé d'optimisation répond au serveur (103) en lui envoyant un message de contrôle et d'activation (207) d'une station radio de base (102) spécifique, une telle station radio de base (102) transfère un message de contrôle (209) au dispositif radio (101), contenant les paramètres de configuration pour la reprogrammation,

le procédé d'optimisation équilibrant des temps d'occupation de la ressource radio parmi différents facteurs d'étalement, maintenant valide une restriction d'accessibilité entre le dispositif radio (101) et la station radio de base (102) au moyen d'une procédure ordonnée de calcul de remplissage d'eau comprenant les étapes suivantes :

a) un vecteur des valeurs de temps d'émission est défini pour chacun des facteurs d'étalement **AT = [$\alpha_1$, $\alpha_2$, ..., $\alpha_{end}$]**, et

b) un vecteur relatif normalisé à la valeur de temps d'émission est défini, correspondant au facteur d'étalement ayant la plus petite valeur $w = \{w_i, \forall i = 1...end | w_i = \alpha_i / \alpha_1\}$, simplifiée par le vecteur q obtenu d'après $q = \{q_i, \forall i = 1...end | q_i = w_i^{-1}\}$,

c) ensuite, un vecteur pondéré P est défini, dont les éléments $P_i$ représentent un indice de congestion pour chaque valeur du facteur d'étalement $SF_i$ obtenu par un produit entre le nombre de dispositifs radio initialement alloués à chaque facteur d'étalement et la valeur de temps d'émission normalisée relative :

$$P = \{P_i, \forall i = 1...end \ | \ P_i = n_i * w_i\}$$

d) afin d'équilibrer les valeurs incluses dans P de manière à maintenir les dispositifs radio représentés dans celui-ci capables de communiquer avec les stations radio de base, si des valeurs sont détectées dans P **caractérisées par** un ordre décroissant, les dispositifs radio tendent à être répartis à différents facteurs d'étalement, en tentant de trouver un ordre non décroissant, lorsque possible, en contrôlant le vecteur P à chaque itération afin de trouver les valeurs qui représentent les pics locaux et en formant le vecteur p, avec les indices des valeurs maximales et ceux des première et dernière valeurs de P, d'après :

$$p = \begin{cases} p(1) = 0 \\ p(i) = \{i - 1 : P(i) > P(i - 1), \forall i \in 2, ..., l\} \\ p(end) = l \end{cases}$$

e) le calcul d'un vecteur des moyennes pondérées est exécuté :

$$\hat{p}(i) = \frac{\sum_{r=p(i)+1}^{p(i+1)} P(r) \cdot q(r)}{\sum_{r=p(i)+1}^{p(i+1)} q(r)} , \forall i \in [1, \text{len}(p) - 1]$$

un tel vecteur des moyennes pondérées étant utilisé pour équilibrer les valeurs de P, sur la base d'un principe selon lequel, étant données deux valeurs adjacentes d'un tel vecteur $Z = p(i)$ et $S = \hat{p}(i + 1)$, les éléments contenus entre ces indices du vecteur P ont la même valeur telle que $P(Z + 1, ..., S) = \hat{p}_1$,

f) à la fin des itérations, le nombre de dispositifs radio à allouer à chaque facteur d'étalement est calculé, d'après :

$$k_{AT} = P * q$$

le système comprend au moins un dispositif radio (101), la au moins une station radio de base (102) et le au moins un serveur (103) configuré pour mettre en œuvre ledit procédé d'optimisation (104), chaque dispositif radio (101) étant capable d'envoyer des messages à au moins une des stations radio de base (102) et chaque dispositif radio (101) étant capable de recevoir des messages provenant d'une et seulement une station radio de base (102), ladite station radio de base (102) transférant les messages reçus au serveur de contrôle (103), qui les traite, en reprogrammant les paramètres radio du dispositif radio (101) de sorte qu'il fonctionne avec une station radio de base (102) spécifique avec une configuration particulière des paramètres opérationnels, chaque dispositif radio (101) étant indépendant, au niveau opérationnel, de la station radio de base (102) particulière afin d'avoir accès au réseau, la station radio de base (102) servant de couche de connexion entre chaque dispositif radio (101) et le serveur de commande (103).

Fig. 1

Fig. 2

Fig. 3

Fig. 4a

Fig. 4b

Fig. 5a

Fig. 5b

Fig. 5c

Fig. 6a

Fig. 6b

Fig. 6c

Fig. 7a

Fig. 7b

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014098782 A